# FASCICULE DE BREVET EUROPEEN

(11) **EP 1 641 580 B1**
(45) Date de publication et mention de la délivrance du brevet: **11.06.2008**
(21) Numéro de dépôt: 04767492.4
(22) Date de dépôt: 28.06.2004
(51) Int. Cl.: B22F 3/105, B22F 3/00, B23K 26/34, B29C 67/00, B29C 41/12

(54) **DISPOSITIF DE REALISATION DE COUCHES MINCES DE POUDRE NOTAMMENT A HAUTES TEMPERATURES LORS D'UN PROCEDE BASE SUR L'ACTION D UN LASER SUR DE LA MATIERE**
VORRICHTUNG ZUR HERSTELLUNG VON DÜNNEN PULVERSCHICHTEN, INSBESONDERE BEI HOHEN TEMPERATUREN, WÄHREND EINES DIE VERWENDUNG EINES LASERS AUF EINEM MATERIAL EINSETZENDEN VERFAHRENS
DEVICE FOR THE PRODUCTION OF THIN POWDER LAYERS, IN PARTICULAR AT HIGH TEMPERATURES, DURING A METHOD INVOLVING THE USE OF A LASER ON A MATERIAL

(30) Priorité: 30.06.2003 FR 0307888
(43) Date de publication de la demande: 05.04.2006
(73) Titulaire: Phenix Systems, 63100 Clermont-Ferrand (FR)
(72) Inventeur: TEULET, Patrick, Didier, F-63200 Riom (FR)
(74) Mandataire: Myon, Gérard Jean-Pierre
(86) Numéro de dépôt international: PCT/FR2004/001646
(87) Numéro de publication internationale: WO 2005/002764

(56) Documents cités:
- FR-A- 2 774 931
- US-A- 5 252 264
- US-A- 5 876 550
- US-A1- 2003 059 492
- US-B1- 6 391 251

## Description

L'invention a trait à un dispositif de mise en couches minces d'une poudre, ou d'un mélange de poudres, et plus particulièrement de la mise en couches minces de poudre, céramique ou métallique, ou d'un mélange de poudres céramiques ou métalliques, utilisé lors d'un procédé basé sur l'action d'un laser sur de la matière contenue dans une enceinte thermique, notamment lors d'un procédé de frittage par un faisceau laser.

Par WO-A-99/42421, on connaît un procédé de prototypage rapide par frittage en phase solide, à l'aide d'un laser, d'une poudre ou d'un mélange de poudres. Pour cela, on utilise un four chauffant à 900° C et une poudre, céramique ou métallique, ou un mélange de poudres, céramiques ou métalliques, de granulométrie et de granularité quelconques, disponibles dans le commerce. Dans ce procédé, un plan de travail est pourvu de deux puits, le premier formant un réservoir à partir duquel la poudre, ou le mélange de poudres, est amené au dessus du second puits pour y être étalé en couches minces préalablement à son frittage à l'aide d'un faisceau laser. Le transport de la poudre, ou du mélange de poudres, entre les deux puits est effectué par un dispositif décrit dans WO-A-01/41939. Ce dispositif est guidé en translation et mobile en rotation. Sa face en contact avec la poudre est pourvue de trois indentations assurant le raclage de la poudre ou du mélange de poudres. Le racleur ainsi formé se déplace selon un angle donné par rapport au plan de travail, ce qui assure une compression partielle de la poudre sur ce dernier. Dans le cas du procédé décrit dans WO-A-99/42421 ce racleur est relié à un rouleau libre en rotation et entraîné en translation par son propre poids. Ce rouleau agit à la suite du racleur et assure le compactage de la poudre ou du mélange de poudres. Le racleur et le rouleau se déplacent sur un plan de travail, pourvu de rails de guidage et d'ergots sur les flancs des rails qui assurent ainsi le basculement du racleur en fin de course. Un tel dispositif ne permet pas, à partir de poudres, ou de mélanges de poudres quelconques, d'obtenir de manière fiable une épaisseur, une qualité de surface et une géométrie désirées de la couche ainsi déposée. De plus, dans une atmosphère pouvant atteindre 900° C, la mise en couches par un tel dispositif est délicate. En effet, après quelques passages, un phénomène d'abrasion et d'usure sur les différentes pièces situées dans l'enceinte apparaît. Cette abrasion et cette usure altèrent l'homogénéité des couches ainsi déposées. De plus, le guidage de ces deux organes se fait à l'intérieur de l'enceinte thermique. Dans la mesure où celle-ci est soumise à une élévation de température pouvant atteindre 900° C, on observe une dilatation des moyens de guidage du racleur et du rouleau. Ces dilatations ne présentent pas forcément la même valeur, ce qui altère la précision de la mise en couches de la poudre, ou du mélange de poudres. Par ailleurs l'entraînement du rouleau par son propre poids ne facilite pas un guidage régulier et précis de ce dernier.

Les irrégularités du positionnement du rouleau sur les rails de guidage, ainsi qu'un phénomène d'abrasion dû au glissement du racleur sur ces mêmes rails amplifient l'imprécision de la mise en couches.

De plus, un tel dispositif de mise en couches, comporte deux éléments distincts, le racleur et le rouleau de compactage, dont l'encombrement total nécessite une longueur importante du plan de travail et de l'enceinte. Ce dimensionnement de l'appareil, et notamment de l'enceinte, ne facilite pas la régulation thermique à l'intérieur de celle-ci. Il est ainsi fréquent qu'apparaisse un gradient de températures qui accentue les dilatations observées préalablement entre le racleur et le rouleau. En pratique, outre un coût élevé de fabrication, il n'est guère possible, avec un tel système, de réaliser plusieurs couches minces successives d'une épaisseur inférieure à 100 micromètres (microns). Même avec des couches supérieures à 100 microns, lorsque la granulométrie de la poudre, ou du mélange de poudres le permet, les épaisseurs et l'homogénéité des couches ainsi déposées sont souvent insuffisantes pour permettre l'action d'un laser sur de la matière, notamment un frittage des pièces.

On connaît par, US-A-5252 264, un appareil équipé d'un rouleau présentant une surface extérieure moletée ou rugueuse. La poudre est poussée par ce rouleau qui avance, tout en tournant en permanence sur lui-même. La surface moletée ou rugueuse participe au compactage de la poudre.

Avec un tel appareil, la poudre n'est pas maintenue en place sur le rouleau et son dépôt n'est pas adapté à la réalisation de couches minces avec tout type de poudres.

C'est à ces inconvénients qu'entend plus particulièrement remédier l'invention en proposant un dispositif permettant la mise en couches minces et homogènes de poudre ou de mélange de poudres, d'épaisseur minimale d'environ 5 microns, cela jusqu'à des hautes températures voisines de 1200° C, en assurant la qualité requise des couches pour une action d'un laser sur de la matière tout en permettant de s'affranchir des conséquences d'un gradient thermique et des effets de l'abrasion sur les moyens de mise en couches.

A cet effet l'invention a pour objet un dispositif de mise en au moins une couche mince d'une poudre, ou d'un mélange de poudres, utilisé lors de l'action d'un laser sur de la matière contenue dans une enceinte thermique, comprenant un moyen de stockage, un moyen d'alimentation en poudre, ou en mélange de poudres, d'une zone de dépôt de la poudre ou du mélange à partir du moyen de stockage et un moyen de compactage de la poudre ou du mélange de poudres déposé sur la zone de dépôt, ce dispositif comprenant un cylindre à base circulaire pourvu, d'une part, d'au moins une rainure ménagée dans une surface externe du cylindre et, d'autre part, d'une surface adaptée pour compacter la poudre ou le mélange de poudres préalablement déposé sur la zone de dépôt, le cylindre, le moyen de stockage, la zone de dépôt, la poudre ou le mélange de poudres, étant situés dans l'enceinte adaptée pour être maintenue en température tout en permettant le guidage et l'entraînement du cylindre à partir de l'extérieur de l'enceinte, la rainure étant orientée selon une direction globalement parallèle à l'axe longitudinal dudit cylindre et étant adaptée pour alimenter en poudre ou en mélange de poudres la zone de dépôt à partir du moyen de stockage, en ramassant la poudre ou le mélange de poudres, en déplaçant la poudre ou le mélange de poudres par un mouvement de translation du cylindre, puis en assurant un dépôt complet et rapide de la poudre ou de mélange de poudres dans la zone de dépôt, la rugosité de la surface externe dudit cylindre étant plus faible que la rugosité de la surface de ladite zone de dépôt, la rugosité de la surface externe étant adaptée à la granulométrie minimale de la poudre (P) utilisée.

Grâce à l'invention, on réalise un dispositif assurant, par un même moyen et de façon coordonnée, la fonction d'alimentation et de compactage dans une enceinte maintenue en température. Outre un encombrement réduit, un tel dispositif permet un guidage précis et constant du dispositif garantissant la mise en couches homogène, même pour des couches de faible épaisseur. L'encombrement réduit d'un tel dispositif permet également de s'affranchir des écarts dimensionnels, différents entre un moyen d'alimentation et un moyen de compactage, générés par le gradient thermique existant entre les différentes zones d'une enceinte. L'utilisation d'une rainure d'alimentation permet d'assurer un dépôt optimisé de la poudre, alors que la surface de compactage peut avoir un état de surface adapté à sa fonction. Ainsi, un unique organe permet la prise de la poudre, son dépôt et son compactage.

Selon des aspects avantageux mais non obligatoires de l'invention, le dispositif incorpore une ou plusieurs des caractéristiques suivantes :
- La surface adaptée pour assurer le compactage comprend au moins une partie d'une surface externe du cylindre
dans laquelle est ménagé au moins une rainure.
- La rainure s'étend, entre les deux extrémités du cylindre, selon une direction globalement parallèle à l'axe longitudinal de l'organe.
- La rainure présente une section transversale globalement configurée en V à fond plat.
- La circonférence du cylindre est sensiblement supérieure au diamètre de la zone de dépôt.
- La température à laquelle sont maintenus l'enceinte et les éléments qui y sont situés est comprise entre la température ambiante et environ 1200°
- Le positionnement, le guidage, et l'entraînement du cylindre sont effectués par des organes de positionnement, de guidage et par un actionneur situés à l'extérieur de l'enceinte du dispositif.
- Des volets disposés dans les flancs de l'enceinte sont mobiles selon des directions différentes par rapport à un plan dans lequel se déplace l'axe longitudinal du cylindre lors du déplacement de ce dernier. Avantageusement, ces volets sont en forme de triangle et de parallélogramme, disposés en chicane et en contact mutuel, de manière à assurer l'isolation thermique de l'enceinte tout en permettant une liaison entre les organes de positionnement, de guidage et d'entraînement du cylindre et le cylindre.

L'invention sera mieux comprise et d'autres avantages de celle-ci apparaîtront plus clairement à la lumière de la description qui va suivre de deux modes de réalisation d'un dispositif conforme à l'invention, donnée uniquement à titre d'exemple et faite en référence aux dessins annexés dans lesquels :
- la figure 1 est une coupe partielle d'un dispositif conforme à l'invention, où seule la partie comprenant le moyen de stockage, la zone de dépôt et l'organe de mise en couches ont été représentés, l'organe de mise en couches étant vu en coupe, en place dans une enceinte fermée, en position de dépose de la poudre au dessus de la zone de dépôt, le système de guidage extérieur à l'enceinte n'étant pas représenté,

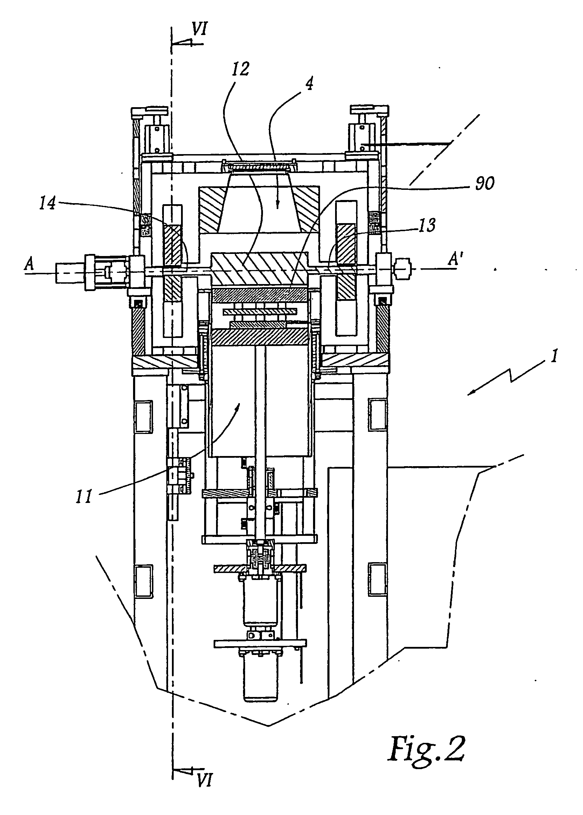

- la figure 2 est une coupe du dispositif représenté à la figure précédente, l'organe de mise en couches étant vu de face selon la flèche F à la figure 1,

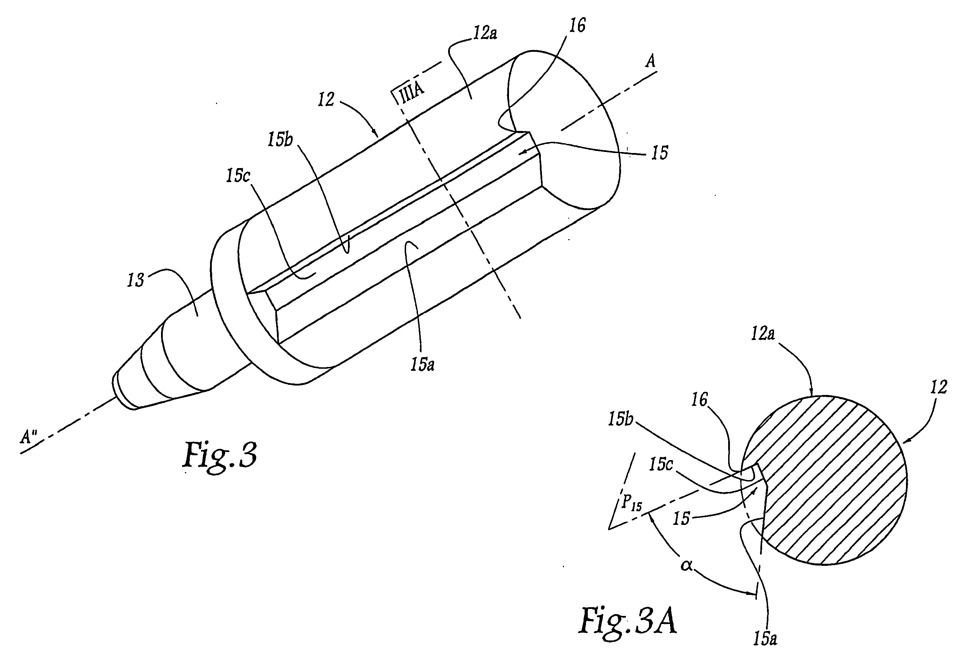

- la figure 3 est une représentation en perspective d'une partie de l'organe de mise en couches seul,
- la figure 3A est une coupe selon le plan III A à la figure 3,
- les figures 4A à 4G sont des schémas illustrant les différentes étapes de la prise de la poudre dans le moyen de stockage, de la dépose, de l'étalement, et du compactage de cette dernière sur la zone de dépôt,
- la figure 5 est une vue schématique partielle d'un organe de mise en couches conforme à un autre mode de réalisation et,

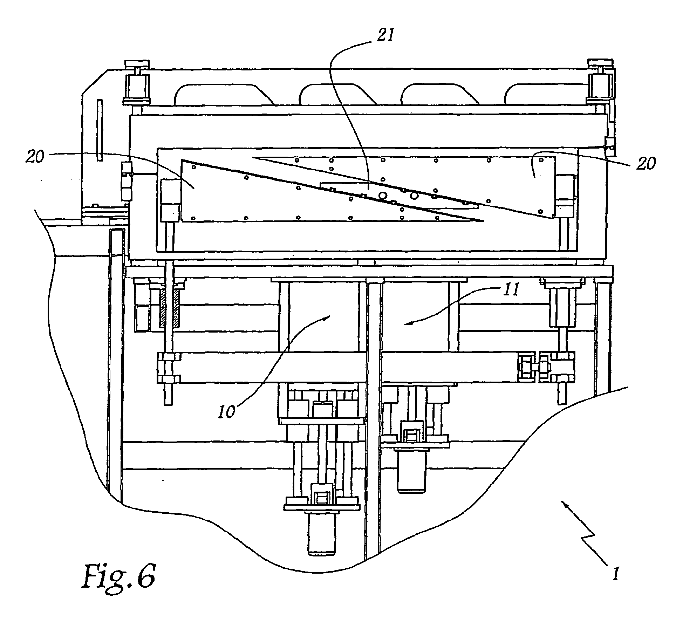

- la figure 6 est une coupe selon la ligne VI-VI à la figure 2, l'organe de mise en couches et les éléments de guidage et d'entraînement n'étant pas représentés.

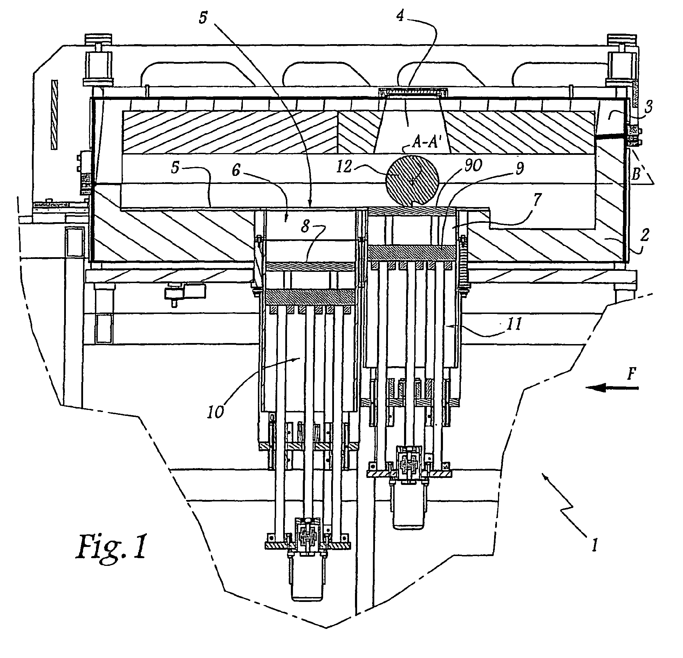

Le dispositif 1 représenté à la figure 1 comprend une enceinte isolée thermiquement et pourvue, en partie haute, d'un moyen de chauffage, non représenté. Cette enceinte, supportée par une structure fixe, comprend un fond 2 globalement configuré en forme de parallélépipède creux sur lequel se positionne un couvercle 3. Un hublot 4, réalisé par exemple en silice, est ménagé dans le couvercle 3. Ce hublot 4 permet le passage d'un faisceau laser lors de son action sur une poudre ou un mélange de poudres. Le fond 2 est immobile et fixé à la structure porteuse de l'appareil 1. Le couvercle 3 est guidé horizontalement de manière à dégager complètement l'accès au volume intérieur du fond 2.

Le fond 2 présente une face interne plane 5 pourvue, sur une partie, de deux orifices circulaires 6, respectivement 7, correspondant aux débouchés de deux puits ménagés dans l'appareil 1. Dans chaque orifice, un piston 8, respectivement 9, se déplace selon une direction globalement perpendiculaire au plan B, dans lequel se déplace l'axe longitudinal AA' de l'organe de mise en couches lors de son déplacement, et assure, temporairement, l'obturation de l'orifice 6, respectivement 7. Ainsi la face 5 forme un plan de travail continu. Ces pistons 8, 9 assurent l'étanchéité des puits et évitent que de la poudre, ou des gaz présent dans l'enceinte, passent dans ces derniers. Le déplacement de ces pistons 8, respectivement 9, s'effectue entre l'orifice 6, respectivement 7, et l'intérieur d'un puits cylindrique à base circulaire 10, respectivement 11, prolongeant les orifices 6, respectivement 7. Les pistons 8, 9 se déplacent indépendamment l'un de l'autre et ils sont actionnés chacun par un système motorisé, notamment par un moteur pas à pas, par un système vis écrou à billes de précision ou tout autre dispositif de mise en mouvement. Ces pistons sont guidés, lors de leur mouvement, par un moyen de guidage comme, par exemple, des éléments de guidage à billes précontraints. Le dispositif de guidage n'est pas soumis aux contraintes thermiques rencontrées dans l'appareil 1. Le déplacement des pistons 8 et 9 entre le fond des puits 10, respectivement 11, et les orifices 6, respectivement 7, s'effectue de manière précise. La précision obtenue, pour chaque piston, est d'environ plus ou moins un micron sur l'épaisseur d'une couche de poudre déposée.

La face supérieure du piston 8 situé dans le puits 10 forme le fond d'un réservoir dans lequel est stocké une poudre P céramique ou métallique, ou un mélange de poudres céramiques ou métalliques. Il s'agit de produits habituellement disponibles dans le commerce.

L'orifice 7, dans lequel débouche le piston 9 qui se déplace à l'intérieur du puits 11, est situé globalement à l'aplomb du hublot 4 lorsque le couvercle 3 est fermé. Ce piston 9 supporte un plateau 90 qui forme la zone de dépôt sur laquelle la poudre P ou le mélange de poudres est déposé en couches minces préalablement à l'action du laser sur la matière.

Le plateau 90 est positionné de façon amovible dans le puits 11, ce qui permet de transporter la pièce une fois réalisée sans avoir à manipuler directement cette dernière. Le plateau 90 est positionné avec précision sur le piston 9 afin de réaliser une mise en couche précise de la première couche de poudre, ou de mélange de poudres. Cette première couche assure le maintien et le positionnement de la pièce à réaliser et conditionne la qualité des couches suivantes.

La course des pistons 8, respectivement 9, est adaptée pour que le piston 8, respectivement le plateau 90, affleurent à la face 5 aux points morts hauts de leurs trajectoires respectives.

A l'extérieur du fond 2, un système d'entraînement et de guidage, non représenté, assure le déplacement en rotation et en translation d'un organe 12 d'alimentation et de compactage de la poudre P ou du mélange de poudres entre les pistons 8 et 9. Le système de guidage est adapté pour assurer un guidage du fond 2 depuis l'extérieur tout en maintenant une isolation thermique de l'enceinte. Ce guidage à partir de l'extérieur permet de s'affranchir des contraintes thermiques et mécaniques rencontrées à l'intérieur de l'enceinte.

L'organe 12 est une pièce réalisée préférentiellement en céramiques. Avec un tel matériau, et avec une géométrie et des dimensions adaptées, l'organe 12 possède une stabilité dimensionnelle et géométrique importante qui lui évite de subir des déformations lorsque l'enceinte est chauffée à haute température, par exemple aux environ de 1200° C. De même, l'organe 12 offre une résistance à l'abrasion importante.

L'organe 12 se présente sous la forme d'un cylindre à base circulaire pourvu à chacune de ses extrémités, en position centrale, de deux axes 13,14 orientés selon l'axe longitudinal AA' du cylindre. Ces axes 13, 14 débouchent sur l'extérieur du fond 2 en passant à travers les parois latérales de ce dernier et sont associés, à l'extérieur, à un dispositif d'entraînement et de guidage motorisé.

L'état de surface de la surface externe 12a du cylindre est d'une qualité proche du « poli miroir » ou, pour le moins, plus lisse que l'état de surface de la zone de dépôt 9. Avantageusement, la surface 12a a une rugosité Ra inférieure ou égale à 0,06 microns.

L'étanchéité thermique, entre l'intérieur de l'enceinte et les moyens de guidage et d'entraînement extérieurs, est réalisés par la combinaison de volets 20, respectivement 21, de forme géométrique simple, notamment en forme de triangle, respectivement de parallélogramme. Ces volets 20, 21 sont disposés alternativement de manière à réaliser, de chaque côté de l'enceinte, une chicane. Ces volets sont en simple contact mécanique, ce qui assure entre eux un fonctionnement sans frottement et sans usure. Les volets 20, en triangle rectangle disposés de manière à former globalement un rectangle, sont mobiles alternativement selon une direction globalement parallèle au déplacement des pistons 8, 9. Les volets 21, en forme de parallélogramme, sont mobiles selon une direction globalement perpendiculaire au déplacement des pistons 8, 9. De cette manière, la chicane réalisée par les volets 20, 21 préserve l'étanchéité de l'enceinte.

Avec une telle configuration, on réduit également l'encombrement du dispositif. Ainsi, on met en mouvement de manière précise le cylindre 12 qui se déplace, selon le plan B, au-dessus de la face 5 avec une course adaptée pour lui permettre de passer successivement au dessus des deux puits 10,11. Les paramètres d'asservissement du cylindre 12, par exemple sa position et sa vitesse de rotation, sont définis en fonction de la poudre, ou du mélange de poudres, de l'épaisseur de la couche à réaliser et d'autres paramètres de mise en oeuvre, comme, par exemple, la température.

Le cylindre 12 comprend, sur sa surface cylindrique externe, une rainure longitudinale 15. Cette rainure 15 est orientée selon une direction globalement parallèle à l'axe longitudinal AA' du cylindre 12. La rainure 15 présente une section globalement en forme de V, dont une paroi 15a est inclinée par rapport à un plan P₁₅ de la rainure 15.

Les parois 15a, 15b convergent en direction du fond 15c de la rainure 15. Une des parois 15b de cette rainure se termine par une arête 16 issue de l'intersection du plan P₁₅ avec la surface cylindrique externe 12a du cylindre 12. De cette manière l'arête 16 forme une raclette permettant de ramasser la poudre P, ou le mélange de poudres, sur le piston 8 et de diriger la poudre, ou le mélange de poudres, vers le fond 15c de la rainure 15.

La circonférence du cylindre 12 est adaptée pour que, lorsque celui-ci effectue une rotation complète autour de son axe AA', il se déplace d'une distance suffisante pour couvrir la totalité de la surface d'un des orifices 6 ou 7.

L'inclinaison de la paroi interne 15b de la rainure 15 est adaptée de manière à assurer un prélèvement efficace de la poudre, ou du mélange de poudres, lors du mouvement du cylindre 12 au-dessus du piston 8, tout en assurant ensuite un dépôt complet et rapide de la poudre P sur le plateau 90.

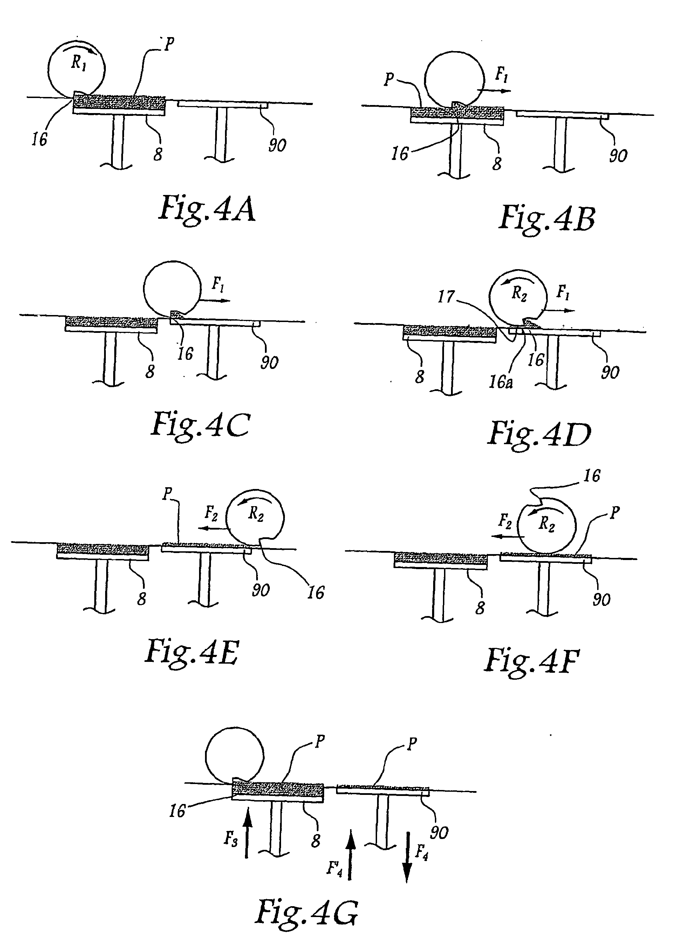

Dans un premier temps, représenté à la figure 4A, le cylindre 12 est en position de repos à une extrémité de la face 5, la rainure 15 étant vide. La poudre P ou le mélange de poudres est stocké sur le piston 8, celui-ci étant dans une position suffisamment haute pour que la poudre P, ou le mélange de poudres, forme un léger relief au dessus de la face 5. Le plateau 90 est, quant à lui, positionné en affleurement, dans son orifice 7, avec la face 5.

Par rotation R₁ du cylindre 12 autour de ses axes 13 et 14, on déplace angulairement ce dernier, ce qui amène en premier l'arête 16 de la rainure 15 au contact de la poudre P au voisinage de la périphérie du piston 8. Comme illustré à la figure 4B, le mouvement de translation, selon la flèche F₁, du cylindre 12 permet que la poudre P, ramassée par l'arête 16 et contenue dans la rainure 15, soit amenée par le cylindre 12 hors du piston 8.

Comme représenté à la figure 4C, lorsque l'on poursuit la translation F₁ du cylindre 12, on positionne la rainure 15 au voisinage du bord du piston 9 où la poudre P se dépose sur le plateau 90 par gravité au voisinage de la périphérie de celui-ci.

On opère ensuite, comme illustré à la figure 4D, un déplacement angulaire R₂ du cylindre 12 afin de positionner une génératrice 17 de sa surface cylindrique 12a au dessus du plateau 90. La poudre P est répartie uniformément et aisément sur le plateau 90 grâce, par exemple, à un déplacement en translation F₁ du cylindre, la génératrice 17 étalant la poudre à la manière d'une raclette , sur le plateau 90. Une partie 16a de la surface cylindrique 12a du cylindre, globalement située entre la génératrice 17 et l'arête 16, participe à l'étalement de la poudre.

De manière concomitante au dépôt de la poudre, le piston 9 s'est déplacé en direction de l'orifice 7, de manière à ce que l'intervalle entre le plateau 90 ou la couche précédemment déposée, et le cylindre 12 soit globalement égal à l'épaisseur de la couche de poudre étalée, avant compactage. Si nécessaire, on peut effectuer plusieurs opérations de ramassage et d'étalement de la poudre, ou du mélange de poudres. Pour cela, on fixe des épaisseurs intermédiaires des couches. En fonction de la nature de la poudre, ou du mélange de poudres, on paramètre la progression de l'épaisseur de la couche déposée. Cette progression est, par exemple, non linéaire décroissante du type y = (ax + b)/ (cx + d).

Au terme de ce déplacement représenté à la figure 4E, lorsque le cylindre 12 a sa rainure 15 vide et que la poudre P est répartie sur le plateau 90, comme représenté à la figure 4E, on imprime une rotation R₂ au cylindre 12.

Cette rotation R₂ est en sens inverse de la rotation R₁ et elle ramène selon la flèche F₂, le cylindre 12 à sa position initiale comme illustré à la figure 4G. Lors de cette phase de compactage, le piston 8 et le plateau 90 se déplace de manière à ménager respectivement un intervalle avec le cylindre 12 correspondant à l'épaisseur finale de la couche. Lors de cette rotation R₂, le passage du cylindre 12 sur le plateau 9 dans l'autre sens assure, par la surface externe 12a du cylindre 12, le lissage et le compactage de la poudre P. Lors de ce passage, le fait que l'état de surface de la surface 12a soit proche du poli miroir, permet de déposer, puis de compacter, une poudre P, quelles que soient la nature et/ou la granulométrie de la poudre. La surface 16a participe également au lissage. La circonférence du cylindre 12 est, en développé, supérieure au diamètre du plateau 90. Si besoin, l'opération de compactage peut être répétée jusqu'à l'obtention de l'épaisseur voulue.

Lors du compactage, on déplace, si nécessaire, le piston 9 et le plateau 90 selon la direction F₄ ou F'₄ de manière concomitante au déplacement R₂ , F₂ du cylindre 12.

Le déplacement F₃ du piston 8 en direction de l'orifice 6 permet de remettre de la poudre P dans une position où elle peut être prélevée par la rainure 15.

Le déplacement selon F₄ du piston 9 permet de mettre la surface supérieure de la couche précédemment déposée globalement coplanaire à la face 5.

La couche de poudre, ou du mélange de poudres, ainsi étalée peut subir l'action d'un faisceau laser, par exemple dans un procédé de frittage ou de fusion, l'ensemble des opérations se faisant dans l'enceinte maintenue en température et de façon étanche aux gaz.

En variante la mise en couches de la poudre, ou du mélange de poudres, est réalisée à température ambiante, par exemple, avec l'enceinte ouverte.

Il suffit alors de répéter les étapes précédentes pour étaler puis compacter successivement plusieurs couches de poudre P ou de mélange de poudres.

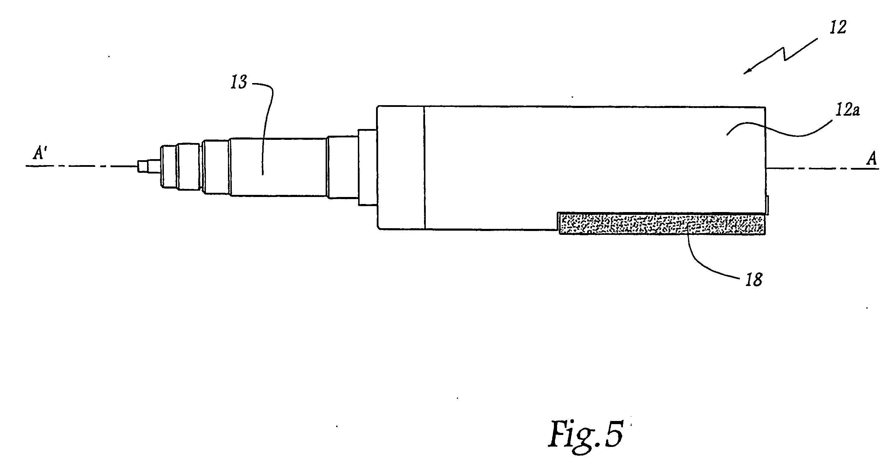

Par un tel organe d'étalement et de compactage, on effectue la mise en place, avant l'action d'un laser sur la poudre, sur le plateau 90 de couches homogènes dont l'épaisseur peut descendre jusqu'à 5 microns selon la granulométrie de la poudre P utilisée. Il est possible, comme représenté à la figure 5, d'avoir un cylindre 12 dont la raclette n'est pas formée par une arête 16 de la rainure 15 mais par une pièce 18 rapportée sur un bord de la rainure 15. Cette pièce 18 est fixée de manière définitive, par exemple, par soudage ou par vissage.

Un tel dispositif de mise en couches minces est donc utilisable en atmosphère confinée c'est-à-dire lorsque le couvercle 3 est fermé, éventuellement sous hautes températures et voire très hautes températures, ou à l'air libre notamment si la granulométrie et la nature de la poudre le permettent. Dans ce dernier cas le couvercle 3 reste ouvert. Les moyens de guidage, tant du cylindre 12 que des pistons 8 et 9, sont disposés à l'extérieur de l'enceinte de travail et des moyens d'étanchéité et d'isolation thermique les protègent de la poudre et de la haute température éventuelle.

Dans une autre configuration et en fonction des diamètres des orifices 6 et 7 et/ou de leur entraxe, on utilise un cylindre 12 pourvu de plusieurs rainures 15 identiques ou non.

De même la forme de la rainure 15 peut être différente de celle représentée.

En variante, on peut ne ménager une rainure 15 que sur une partie de la longueur du cylindre 12.

## Revendications

1. Dispositif de mise en au moins une couche mince d'une poudre (P), ou d'un mélange de poudres, utilisé lors de l'action d'un laser sur de la matière contenue dans une enceinte thermique, comprenant un moyen de stockage (8), un moyen (12) d'alimentation en poudre, ou en mélange de poudres, d'une zone de dépôt (9) de ladite poudre ou dudit mélange à partir dudit moyen de stockage et un moyen de compactage de la poudre ou du mélange de poudres déposé sur ladite zone de dépôt, ledit dispositif comprenant un cylindre à base circulaire (12) pourvu, d'une part, d'au moins une rainure (15), ménagée dans une surface externe dudit cylindre (12) et, d'autre part, d'une surface (12a, 16a) adaptée pour compacter la poudre (P) ou le mélange de poudres préalablement déposé sur ladite zone de dépôt (9), ledit cylindre (12), ledit moyen de stockage (8), ladite zone de dépôt (9), la poudre (P) ou le mélange de poudres, étant situés dans ladite enceinte adaptée pour être maintenue en température tout en permettant le guidage et l'entraînement du cylindre (12) à partir de l'extérieur de ladite enceinte, ladite rainure (15) étant orientée selon une direction globalement parallèle à l'axe longitudinal (AA') dudit cylindre (12) et étant adaptée pour alimenter en poudre ou en mélange de poudres la zone de dépôt (9) à partir du moyen de stockage (8), en ramassant la poudre ou le mélange de poudres (figure 48), en déplaçant la poudre ou le mélange de poudres par un mouvement de translation du cylindre (12), puis en assurant un dépôt (figure 4D) complet et rapide de la poudre ou du mélange de poudres dans la zone de dépôt, rugosité de la surface externe (12a) dudit cylindre (12) étant plus faible que la rugosité de la surface de ladite zone de dépôt (9), la rugosité de la surface externe (12a) étant adaptée à la granulométrie minimale de la poudre (P) utilisée.

2. Dispositif selon la revendication 1, **caractérisé en ce que** ladite surface (12a, 16a) adaptée pour assurer le compactage comprend au moins une partie (12a, 16a) d'une surface externe dudit cylindre (12) dans laquelle est ménagée au moins une rainure (15).

3. Dispositif selon la revendication 1, **caractérisé en ce que** ladite rainure (15) s'étend, entre les deux extrémités du cylindre (12), selon une direction globalement parallèle à l'axe longitudinal (AA') dudit cylindre.

4. Dispositif selon l'une des revendications précédentes, **caractérisé en ce que** ladite rainure (15) présente une section transversale globalement configurée en V à fond plat.

5. Dispositif selon la revendication 1, **caractérisé en que** la circonférence du cylindre (12) est sensiblement supérieure au diamètre de la zone de dépôt (9).

6. Dispositif selon l'une des revendications précédentes, **caractérisé en ce que** la température à laquelle sont maintenus l'enceinte et les éléments (8, 9, 12, P) qui y sont situés est comprise entre la température ambiante et environ 1200° C.

7. Dispositif selon l'une des revendications précédentes, **caractérisé en ce que** le positionnement, le guidage et l'entraînement du cylindre (12) sont effectués par des organes de positionnement, de guidage et par un actionneur situés à l'extérieur de l'enceinte du dispositif.

8. Dispositif selon l'une des revendications précédentes, **caractérisé en ce que** des volets (20, 21) disposés dans les flancs de l'enceinte sont mobiles selon des directions différentes par rapport à un plan (B) dans lequel se déplace l'axe longitudinal (AA') du cylindre (12) lors du déplacement de ce dernier.

9. Dispositif selon la revendication 8 **caractérisé en ce que** les volets (20, 21) sont en forme de triangle (20) et de parallélogramme (21), disposés en chicane et en contact mutuel, de manière à assurer l'isolation thermique de l'enceinte tout en permettant une liaison entre les organes de positionnement, de guidage et d'entraînement dudit cylindre (12) et ledit cylindre.

## Claims

1. Device for putting into at least one thin layer a powder (P), or a mixture of powders, used during the action of a laser on material contained in a thermal enclosure, comprising a storage means (8), a means (12) for supplying with powder, or a mixture of powders, an area (9) for deposition of said powder or said mixture from said storage means and a means of compacting the powder or mixture of powders deposited on said deposition area, said device comprising a circular-based cylinder (12) provided, on the one hand, with at least one groove (15), made in an external surface of said cylinder (12), and, on the other hand, a surface (12a, 16a) adapted to compact the powder (P) or mixture of powders previously deposited on said deposition area (9), said cylinder (12), said storage means (8), said deposition area (9) and the powder (P) or mixture of powders being situated in said enclosure adapted to be temperature-maintained whilst allowing the guidance and driving of the cylinder (12) from the outside of said enclosure, said groove (15) being oriented in a direction overall parallel to the longitudinal axis (AA') of said cylinder (12) and being adapted to supply the deposition area (9) with powder or a mixture of powders from the storage means (8), by picking up the powder or mixture of powders (Figure 4B), moving the powder or mixture of powders by a translational movement of the cylinder (12), then providing a complete and rapid deposition (Figure 4D) of the powder or mixture of powders in the deposition area, the roughness of the external surface (12a) of said cylinder (12) being less than the roughness of the surface of said deposition area (9), the roughness of the external surface (12a) being adapted to the minimum granulometry of the powder (P) used.

2. Device according to Claim 1, **characterised in that** said surface (12a, 16a) adapted to provide the compaction comprises at least one part (12a, 16a) of an external surface of said cylinder (12) in which at least one groove (15) is made.

3. Device according to Claim 1, **characterised in that** said groove (15) extends, between the two ends of the cylinder (12), in a direction overall parallel to the longitudinal axis (AA') of said cylinder.

4. Device according to one of the preceding claims, **characterised in that** said groove (15) has a cross-section configured overall as a flat-bottomed V.

5. Device according to Claim 1, **characterised in that** the circumference of the cylinder (12) is substantially greater than the diameter of the deposition area (9).

6. Device according to one of the preceding claims, **characterised in that** the temperature at which the enclosure and the elements (8, 9, 12, P) situated therein are maintained lies between the ambient temperature and approximately 1200°C.

7. Device according to one of the preceding claims, **characterised in that** the positioning, guidance and driving of the cylinder (12) are performed by positioning and guidance members and an actuator which are situated outside the enclosure of the device.

8. Device according to one of the preceding claims, **characterised in that** shutters (20, 21) disposed in the sides of the enclosure are movable in different directions with respect to a plane (B) in which the longitudinal axis (AA') of the cylinder (12) moves during movement of the latter.

9. Device according to Claim 8, **characterised in that** the shutters (20, 21) are in the shape of a triangle (20) and a parallelogram (21), disposed in a staggered manner and in mutual contact, so as to provide the thermal insulation of the enclosure whilst allowing a connection between the positioning, guidance and driving members of said cylinder (12) and said cylinder.

## Patentansprüche

1. Vorrichtung zum Einbringen wenigstens einer dünnen Schicht eines Pulvers (P) oder eines Gemisches von Pulvern, verwendet bei der Anwendung eines Lasers auf ein Material, in eine thermische Kammer, umfassend einen Speicher (8), eine Zufuhreinrichtung (12) für Pulver oder Pulvergemisch, einen Ablagerungsbereich (9) des Pulvers oder des Pulvergemisches, das von einem Speicher kommt und eine Einrichtung zum Verdichten des Pulvers oder des Pulvergemisches, das auf dem Ablagerungsbereich abgelagert ist, umfassend einen Zylinder (12) mit kreisförmigen Querschnitt, der einerseits mit einer Nut (15) versehen ist, die sich in der äußeren Mantelfläche des Zylinders (12) befindet, und andererseits eine Fläche (12a, 16a) zum Verdichten des Pulvers (P) oder des Pulvergemisches vor dem Ablagern im Ablagerungsbereich (9), wobei der Zylinder (12), der Speicher (8), der Ablagerungsbereich (9) und das Pulver (P) oder Pulvergemisch, angeordnet in der Kammer, dafür vorgesehen sind, auf Temperatur gehalten zu werden, wobei die Führung und der Antrieb des Zylinders (12) von außerhalb der Kammer möglich ist, wobei die Nut (15) im wesentlichen parallel zur Längsachse (A, A') des Zylinders verläuft und derart gestaltet ist, dass sie Pulver oder Pulvergemisch dem Ablagerungsbereich (9) aus dem Speicher (8) zuführt, wobei sich das Pulver oder Pulvergemisch (Figur 4B) sammelt, in dem sich das Pulver oder das Pulvergemisch durch eine translatorische Bewegung des Zylinders (12) verschiebt, und sodann eine vollständige und rasche Ablagerung (Figur 4D) des Pulvers oder des Pulvergemisches im Ablagerungsbereich herstellt, wobei die Rauhigkeit der äußeren Mantelfläche (12a) des Zylinders (12) geringer ist als die Rauhigkeit der Fläche des Ablagerungsbereiches (9), und die Rauhigkeit der äußeren Mantelfläche (12a) der minimalen Körnung des verwendeten Pulvers (P) angepasst ist.

2. Vorrichtung nach Anspruch 1, **dadurch gekennzeichnet, dass** die genannte Fläche (12a, 16a), die im Hinblick auf die Kompaktierung gestaltet ist, wenigstens einen Teil (12a, 16a) der Mantelfläche des Zylinders (12) umfasst, in welcher wenigstens eine Nut (15) eingelassen ist.

3. Vorrichtung nach Anspruch 1, **dadurch gekennzeichnet, dass** sich die Nut (15) zwischen den beiden Enden des Zylinders (12) in einer zur Längsachse (A, A') des Zylinders im wesentlichen parallelen Richtung erstreckt.

4. Vorrichtung nach einem der vorausgegangenen Ansprüche, **dadurch gekennzeichnet, dass** die Nut einen Querschnitt im wesentlichen von der Gestalt eines V mit flachem Boden aufweist.

5. Vorrichtung nach Anspruch 1, **dadurch gekennzeichnet, dass** der Umfang des Zylinders (12) deutlich größer als der Durchmesser des Ablagerungsbereiches (9) ist.

6. Vorrichtung nach einem der vorausgegangenen Ansprüche, **dadurch gekennzeichnet, dass** die Temperatur, bei welcher die Kammer und die Elemente (8, 9, 12, P) gehalten sind, die sich darin befinden, zwischen Umgebungstemperatur und ungefähr 1.200°C liegt.

7. Vorrichtung nach einem der vorausgegangenen Ansprüche, **dadurch gekennzeichnet, dass** die Positionierung, Führung und das Antreiben des Zylinders (12) durch Positionier-, Führungs- und Antriebselemente bewirkt werden, angeordnet außerhalb der Kammer der Vorrichtung.

8. Vorrichtung nach einem der vorausgegangenen Ansprüche, **dadurch gekennzeichnet, dass** an den Flanken der Kammer angeordnete Klappen (20, 21) in Richtungen beweglich sind, die in Bezug auf eine Ebene (B) unterschiedlich sind, in welcher sich die Längsachse (A, A') des Zylinders (12) während dessen Verschiebens bewegt.

9. Vorrichtung nach Anspruch 8, **dadurch gekennzeichnet, dass** die Klappen (20, 21) die Gestalt eines Dreiecks (20) und eines Parallelogrammes (21) aufweisen, angeordnet an Vorsprüngen und in gegenseitigen Kontakt, derart, dass die thermische Isolierung der Kammer sichergestellt wird, und dass gleichzeitig eine Verbindung zwischen den Positionier-, Führungs- und Antriebselementen des Zylinders (12) und dem Zylinder ermöglicht wird.
